# EUROPEAN PATENT SPECIFICATION

(11) **EP 1 872 575 B1**
(45) Date of publication and mention of the grant of the patent: **12.11.2008**
(21) Application number: 06750487.8
(22) Date of filing: 17.04.2006
(51) Int. Cl.: H04N 5/761, H04N 7/16, H04N 7/00

(54) **PAUSING AND RESUMING CONTENT STREAMING ON WIRELESS DEVICES**
ANHALTEN UND WIEDERAUFNEHMEN DES INHALTS-STREAMING BEI DRAHTLOSEN VORRICHTUNGEN
INTERRUPTION ET REPRISE D'UNE DIFFUSION EN CONTINU SUR DES DISPOSITIFS SANS FIL

(30) Priority: 18.04.2005 US 672341 P
(43) Date of publication of application: 02.01.2008
(73) Proprietor: Home Box Office, Inc., New York, NY 10036 (US)
(72) Inventor: GABRIEL, Michael, Old Greenwich, Connecticut 06870 (US); CUTTNER, Craig, D., Norwalk, Connecticut 06855 (US); COSTEN, Sarah, Yarmouth, Maine 04096 (US); ZITTER, Robert, Stamford, Connecticut 06905 (US); DIBARTOLOMEO, Jeff, Merrick, New York 11566 (US); PROBST, Bruce, Croton-on-Hudson, NY 10520 (US)
(74) Representative: Dunleavy, Kevin James
(86) International application number: PCT/US2006/014459
(87) International publication number: WO 2006/113655

(56) References cited:
- EP-A- 1 104 189
- EP-A- 1 292 137
- WO-A-02/03683
- WO-A-20/05112393
- US-A- 5 764 736
- US-A1- 2001 038 690
- US-A1- 2003 131 356
- US-A1- 2004 171 377
- US-A1- 2005 043 020
- WALKER M D ET AL: "MOBILE VIDEO-STREAMING" BT TECHNOLOGY JOURNAL, SPRINGER, DORDRECHT, NL, vol. 21, no. 3, July 2003 (2003-07), pages 192-202, XP001171241 ISSN: 1358-3948

## Description

### BACKGROUND OF THE INVENTION

### Field of the Invention

The present invention relates to communications, and, in particular, to content (e.g., video) streaming on wireless devices, such as cellular telephones and other portable consumer electronic devices.

### Description of the Related Art

Video streaming services for cell phones and the like are coming on line. However, the streaming of video content via wireless communication networks to portable, multi-functional devices such as cell phones that support both video streaming applications and traditional telephone communications, involves situations that are not likely to occur during conventional video streaming applications in which video content is transmitted via a wired (optical and/or electrical) communication network to a stationary, dedicated video processor, such as a digital video recorder/player. For example, a dedicated video processor does not have to handle incoming telephone calls during a video streaming application. Furthermore, a stationary video processor that receives video content via a wired cable network does not have to handle the loss of service associated with a mobile device, such as a cell phone, physically moving outside of the wireless service area.

### SUMMARY OF THE INVENTION

In one embodiment, the present invention involves (a) receiving a current transmission of content; (b) playing the received content during the current transmission; (c) interrupting the playing of the received content prior to the end of the content; (d) generating information related to timing of the interruption of the playing; and (e) resuming playing of the content during a subsequent different transmission of the content, wherein the resumption of the playing of the content is based on the interruption-related information.

In another embodiment, the present invention involves (a) transmitting a schedule of content transmissions to a wireless device; and (b) transmitting content to the wireless device in a looped manner, where the wireless device (1) receives a current transmission of content; (2) plays the received content during the current transmission; (3) interrupts the playing of the received content prior to the end of the content; (4) generates information related to timing of the interruption of the playing; and (5) resumes playing of the content during a subsequent different transmission of the content, wherein the resumption of the playing of the content is based on the interruption-related information and the schedule of content transmissions.

### BRIEF DESCRIPTION OF THE DRAWINGS

Other aspects, features, and advantages of the present invention will become more fully apparent from the following detailed description, the appended claims, and the accompanying drawings in which like reference numerals identify similar or identical elements.

Fig. 1 shows a portion of a communications system according to one embodiment of the present invention; and
Fig. 2 shows a flow diagram of exemplary processing implemented by the cell phone of Fig. 1, according to one implementation of the communications system of Fig. 1 in which the content server transmits looped video content.

### DETAILED DESCRIPTION

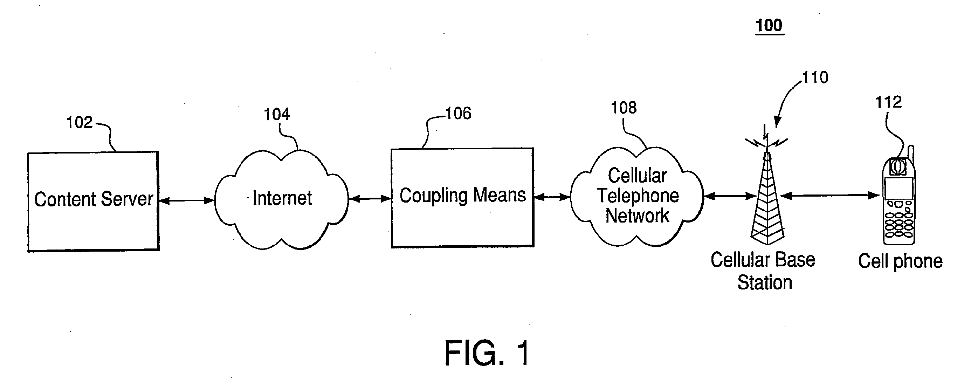

Fig. 1 shows a portion of a communications system **100,** according to one embodiment of the present invention. In particular, Fig. 1 shows a content server **102** communicating with a cell phone **112** via a communication network that includes, in this particular embodiment, Internet **104,** coupling means **106,** cellular telephone network **108,** and cellular base station **110.** Although different implementations of communications system **100** may include different types of communications (e.g., electrical and/or optical, wired and/or wireless) between and within the various nodes shown in Fig. 1, the communications between cellular base station **110** and cell phone **112** are wireless communications conforming to any suitable known or future wireless communications standard. Communications system **100** is just one exemplary embodiment of the present invention; other embodiments may include different sets of nodes and different types of network configurations supporting communications between one or more content servers and one or more end users (e.g., cell phones).

In addition to supporting traditional mobile phone communications via cellular telephone network **108,** cell phone **112** also supports a video streaming application in which video content is transmitted from content server **102** to cell phone **112** for play at cell phone **112.** As used in this specification, the term "streaming" refers to the transmission and play of content in which the content is played substantially as the content is received at the playing device (i.e., in real-time), with minimal buffering of content data to handle jitter and other typical variations in the timing of the play of the content and to support buffering requirements inherent to video coding standards such as MPEG. Depending on the particular implementation, cell phone **112** may support a wide variety of functions and capabilities associated with such a video streaming application, some of which functions and capabilities will depend on the functions and capabilities of content server **102** and cellular telephone network **108.**

In one possible implementation of communications system **100,** a single stream of video content is transmitted from content server **102** to cellular telephone network **108,** which converts that single video stream into a plurality of unicast streams, where each unicast stream is transmitted to a different cell phone, such as cell phone **112.** In other implementations, the video content may be transmitted to the cell phones in a multicast or broadcast manner (where a single video stream is transmitted to multiple cell phones). In unicast and multicast transmissions, the recipients of the transmissions are known, while the recipients are not necessarily known in broadcast transmissions. For example, multi-mode cell phones that can interface with the infrastructure typically employed for cellular voice calls as well as the infrastructure typically employed for terrestrial digital television broadcasting are or soon will be available. For such devices, broadcast reception of digital video is possible. In addition, future "cellular telephony" infrastructures may also support broadcast transmissions.

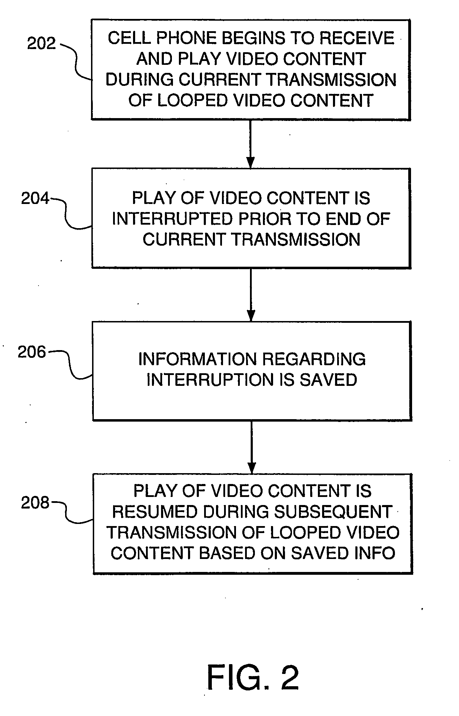

Fig. 2 shows a flow diagram of exemplary processing implemented by cell phone **112,** according to one implementation of communications system **100** in which content server **102** transmits looped video content. Looped video content refers to the repeated transmission of the same video content by content server **102,** where the different transmissions may be end-to-end or disjoint or overlapping. In end-to-end transmissions, the transmission of video content is re-started immediately following the end of the previous transmission. In disjoint transmissions, there is a period of time between the end of one transmission and the start of the next transmission. In overlapping transmissions, another transmission is started before the immediately previous transmission has ended. Note that more than two transmissions may be overlapping at the same time.

The processing of Fig. 2 begins with cell phone **112** receiving and playing streaming video content from content server **102** during a particular (i.e., current) transmission of the looped video content (step **202** of Fig. 2). The exact details as to how this particular video streaming session is initiated will vary depending on the particular implementation. In one implementation, cell phone **112** receives and stores a schedule of video content transmissions (i.e., "video programs"), e.g., from content server **102** to cellular telephone network **108,** and the user uses cell phone **112** to send a request, e.g., to cellular telephone network **108,** to request unicast transmission of a particular video program to cell phone **112.** In another embodiment, each transmission of video content may include metadata identifying subsequent re-transmission times of that same content. If there is a significant delay between the time of the user's request and the start of the next looped transmission, cell phone **112** may receive a message via cellular telephone network **108** informing the user that the transmission of the requested video content is about to begin. The message may be audible or visual or both, including the use of special logo icons identifying the video content, such as a logo identifying the channel (e.g., an HBO channel logo) associated with the video content.

In another implementation, cellular telephone network **108** automatically transmits the video content, or notifications of available video content, to all of its associated cell phones (including cell phone **112**), and the user of cell phone **112** determines whether to play the video content based on the locally stored transmission schedule, without cell phone **112** having to transmit any messages to request such transmission. In this case, cell phone **112** may generate a reminder to its user about upcoming transmission of video content pre-selected by the user.

In any case, at some point during the transmission of the streaming video content, the play of that video content at cell phone **112** may be interrupted (step **204**). Such an interruption may result from many different situations. The user may actively pause the play, for example, to make an outgoing telephone call or accept an incoming telephone call or simply to take a break from watching the video content. Alternatively, the user may passively pause the play, for example, by previously specifying the phone number of a caller from whom an incoming call will automatically interrupt the play. Play may also be interrupted independent of the user's intention, for example, when cell phone **112** experiences a loss of signal after leaving the coverage area of cellular telephone network **108.**

In any case, cell phone **112** reacts to the interruption of the play of the streaming video content by identifying appropriate information related to the timing of the interruption (step **206**). Depending on the particular implementation, such information may be in the form of, for example, the frame number of the video content at which the interruption occurred (e.g., corresponding to the key (I) frame preceding the interruption), the date and time code at which the interruption occurred, or timing offset from the start of the transmission at which the interruption occurred. Furthermore, depending on the particular implementation, the information may be stored locally on cell phone **112** and/or transmitted for storage at cellular telephone network **108** and/or content server **102,** for use during subsequent processing (such as during step **208** as described next).

If the interruption-related information is stored only locally, then the current transmission of video content to cell phone **112** may continue, even though cell phone **112** will not play that portion of the video content. In certain implementations, if the interruption-related information is transmitted, e.g., to cellular telephone network **108,** then pausing of the play of the video content by cell phone **112** may trigger termination of the current transmission of the video content to cell phone **112.**

Note that, for implementations that involve cell phone **112** transmitting a message to notify cellular telephone network **108** about the interruption of play, if the interruption resulted from a loss of signal (e.g., due to cell phone **112** leaving the coverage area of the network), then cell phone **112** would have to wait until communications with cellular telephone network **108** were reacquired before being able to transmit such a message.

According to the processing scenario of Fig. 2, during some subsequent transmission of the looped video content, play of the video content at cell phone **112** is resumed, where the resumption of playing is based on the stored information related to the timing of the interruption (step **208**). Exactly how the play of the video content gets resumed and from what point in the transmission will depend on the particular implementation and/or options selected by the user. For example, in one scenario, based on the time that the play was interrupted in step **204** and its stored transmission schedule, cell phone **112** automatically determines the date and time of an equivalent point in the video content during a subsequent transmission of the looped content and notifies the user in advance that resumption of the play is available, to enable the user to choose whether or not to exercise that option. In another scenario in which the interruption information is transmitted and stored by cellular telephone network **108,** network **108** determines the equivalent point in the video content and transmits a message to cell phone **112** to prompt and enable the user to resume play of the video content.

For implementations in which the transmission of looped video content to cell phone **112** depends on whether cell phone **112** is actually playing the video content, cell phone **112** will transmit a request, e.g., to cellular telephone network **108,** to resume transmission after the interruption of step **204.** On the other hand, for implementations in which the transmission of looped video content to cell phone **112** proceeds independent of whether cell phone **112** is actually playing the video content, cell phone **112** can independently resume playing the video content based on its stored transmission schedule, without having to transmit a request for resumption of transmission.

Although the processing of Fig. 2 corresponds to a situation in which the play of video content is resumed during a subsequent transmission of the looped video content at approximately the same location in the video content at which the play was previously paused, cell phone **112** may provide the user with one or more of the following options:
o Resume play of the same transmission of the looped video content, albeit with a gap in the video content corresponding to the duration of the pause;
o Resume play of the video content with a user-specified (positive or negative) time offset relative to the location of the pause. For example, this would enable the user to resume play during a subsequent transmission of the video content at a location 5 minutes before the video content was interrupted; and
o Resume play of the video content from the beginning of the content during a subsequent transmission.

### Messaging

The need for and details regarding messages transmitted to and from cell phone **112** of Fig. 1 will depend on the particular implementation of communication system **100.** For some implementations, the only messaging related to the streaming video application is the downloading of the transmission schedule to the cell phone, after which, the cell phone is able to operate independently to start, pause, and resume play of transmitted video content. At the other extreme are implementations in which cell phone **112** transmits requests upstream to start, pause, and/or resume video transmissions for play at the cell phone.

For implementations involving such messaging, the messages may include one or more of the following types of information (as appropriate):
o Identification of the cell phone;
o Identification of the content server;
o Identification of the video content;
o Identification of the particular transmission of the video content;
o Function requested (e.g., start transmission, pause transmission, resume transmission);
o Video frame or other identifier of a particular location in the video content;
o Authentication and authorization data; and
o Time code(s) associated with the message and/or the function to be implemented.
For example, in addition to identifying the requested function, a request to start transmission of video content may include identification of the requesting cell phone and identification of the particular transmission of video content. In addition to this same information, a request to pause or resume transmission of video content may also include the video frame corresponding to the pause.

### Alternative Embodiments

Although communication system **100** of Fig. 1 has been described in the context of streaming video content (which is typically assumed to include audio data as well as video data) in a looped manner, alternative communication systems can also be implemented in other suitable contexts. For example, a communication system can be implemented in the context of streaming only audio content. A communication system can also be implemented in the context of streaming text, e.g., for electronic book applications. A communication system can also be implemented in non-streaming contexts in which data is transmitted and buffered or otherwise stored at the cell phone for non-real-time playback. Such implementations might or might not involve looped transmissions.

Although communication system **100** has been described in the context of cell phones, alternative communication systems can be implemented in the context of other types of receivers, including mobile or stationary, wired or wireless receivers that might or might not support traditional telephone communications.

It should be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments of the present invention.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

It will be further understood that various changes in the details, materials, and arrangements of the parts which have been described and illustrated in order to explain the nature of this invention may be made by those skilled in the art without departing from the scope of the invention as expressed in the following claims.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive of other embodiments. The same applies to the term "implementation."

## Claims

1. A method comprising:
(a) receiving a current transmission of content;
(b) playing the received content during the current transmission;
(c) interrupting the playing of the received content prior to the end of the content;
(d) generating information related to timing of the interruption of the playing; and
(e) resuming playing of the content during a subsequent different transmission of the content, wherein the resumption of the playing of the content is based on the interruption-related information.

2. The invention of claim 1, wherein: the content is video content played in a streaming manner; the method is implemented by a wireless device; and the content is transmitted in a looped manner to the wireless device using wireless communications.

3. The invention of claim 2, wherein the wireless device is further adapted to function as a cell phone.

4. The invention of claim 2, wherein the content is transmitted to the wireless device in a unicast manner.

5. The invention of claim 1, further comprising the step of receiving and storing a schedule of content transmissions, wherein the timing of the interruption is compared to the schedule of content transmissions to determine timing for the resumption of the playing of the content during the subsequent transmission.

6. The invention of claim 1, wherein the current transmission of the content contains data corresponding to the timing of the subsequent transmission of the content.

7. The invention of claim 1, wherein step (e) comprises:
(1) generating a user prompt regarding the resumption of the playing of the content during the subsequent transmission; and
(2) determining whether to resume the playing of the content based on a user response to the user prompt.

8. The invention of claim 1, wherein the playing of the received content is directly interrupted by a user.

9. The invention of claim 1, wherein the playing of the received content is indirectly interrupted by a user, wherein the playing is automatically interrupted upon detection of a condition for interrupting the playing, wherein specification of the condition by the user was previously received.

10. The invention of claim 1, wherein the playing of the received content is interrupted by a loss of signal of the current transmission.

11. The invention of claim 1, further comprising transmitting the interruption-related information for use in non-local processing.

12. The invention of claim 1, wherein:
the content is video content played in a streaming manner;
the method is implemented by a wireless device further adapted to function as a cell phone;
the content is transmitted in a looped manner to the wireless device using unicast wireless communications; further comprising the step of receiving and storing a schedule of content transmissions; and
the timing of the interruption is compared to the schedule of content transmissions to determine timing for the resumption of the playing of the content during the subsequent transmission.

13. The invention of claim 12, wherein step (e) comprises:
(1) generating a user prompt regarding the resumption of the playing of the content during the subsequent transmission; and
(2) determining whether to resume the playing of the content based on a user response to the user prompt.

14. Apparatus comprising:
(a) means for receiving a current transmission of content;
(b) means for playing the received content during the current transmission;
(c) means for interrupting the playing of the received content prior to the end of the content;
(d) means for generating information related to timing of the interruption of the playing; and
(e) means for resuming playing of the content during a subsequent different transmission of the content, wherein the resumption of the playing of the content is based on the interruption-related information.

15. The invention of claim 14, wherein:
the content is video content played in a streaming manner;
means (a)-(e) are part of a wireless device further adapted to function as a cell phone;
the content is transmitted in a looped manner to the wireless device using unicast wireless communications;
further comprising means for receiving and storing a schedule of content transmissions; and
the timing of the interruption is compared to the schedule of content transmissions to determine timing for the resumption of the playing of the content during the subsequent transmission.

16. The invention of claim 14, wherein the current transmission of the content contains data corresponding to the timing of the subsequent transmission of the content.

17. A method comprising:
(a) transmitting a schedule of content transmissions to a wireless device; and
(b) transmitting content to the wireless device in a looped manner, wherein the wireless device is adapted to:
(1) receive a current transmission of content;
(2) play the received content during the current transmission;
(3) interrupt the playing of the received content prior to the end of the content;
(4) generate information related to timing of the interruption of the playing; and
(5) resume playing of the content during a subsequent transmission of the content, wherein the resumption of the playing of the content is based on the interruption-related information and the schedule of content transmissions.

18. The invention of claim 17, wherein:
the content is video content played in a streaming manner;
steps (a)-(b) are implemented using a content server;
the wireless device is further adapted to function as a cell phone;
the content is transmitted in a looped manner to the wireless device using unicast wireless communications; and
the timing of the interruption is compared to the schedule of content transmissions to determine timing for the resumption of the playing of the content during the subsequent transmission.

19. A communications system comprising:
(a) means for transmitting a schedule of content transmissions to a wireless device; and
(b) means for transmitting content to the wireless device in a looped manner, wherein the wireless device is adapted to:
(1) receive a current transmission of content;
(2) play the received content during the current transmission;
(3) interrupt the playing of the received content prior to the end of the content;
(4) generate information related to timing of the interruption of the playing; and
(5) resume playing of the content during a subsequent transmission of the content, wherein the resumption of the playing of the content is based on the interruption-related information and the schedule of content transmissions.

20. The invention of claim 19, wherein:
the content is video content played in a streaming manner;
means (a)-(b) are part of a content server;
the wireless device is further adapted to function as a cell phone;
the content is transmitted in a looped manner to the wireless device using unicast wireless communications; and
the timing of the interruption is compared to the schedule of content transmissions to determine timing for the resumption of the playing of the content during the subsequent transmission.

## Patentansprüche

1. Ein Verfahren, das Folgendes umfasst:
(a) Empfangen einer laufenden Übertragung von Inhalt;
(b) Abspielen des empfangenen Inhalts während der laufenden Übertragung;
(c) Unterbrechen des Abspielens des empfangenen Inhalts vor Ende des Inhalts;
(d) Erzeugen von Informationen in Bezug auf den Zeitpunkt der Unterbrechung des Abspielens; und
(e) Wiederaufnehmen des Abspielens des Inhalts während einer nachfolgenden anderen Übertragung des Inhalts, **dadurch gekennzeichnet, dass** die Wiederaufnahme des Abspielens des Inhalts auf den mit der Unterbrechung verbundenen Informationen beruht.

2. Die Erfindung nach Anspruch 1, **dadurch gekennzeichnet, dass** es sich bei dem Inhalt um Video-Inhalt handelt, der per Streaming abgespielt wird; dass das Verfahren von einer drahtlosen Vorrichtung durchgeführt wird; und dass der Inhalt unter Verwendung von Drahtloskommunikation in schleifenförmiger Weise an die drahtlose Vorrichtung übertragen wird.

3. Die Erfindung nach Anspruch 2, **dadurch gekennzeichnet, dass** die drahtlose Vorrichtung weiter angepasst ist, um als ein Mobilfunktelefon zu fungieren.

4. Die Erfindung nach Anspruch 2, **dadurch gekennzeichnet, dass** der Inhalt über eine Punkt-zu-Punkt-Verbindung an die drahtlose Vorrichtung übertragen wird.

5. Die Erfindung nach Anspruch 1, die außerdem folgenden Schritt umfasst:
das Empfangen und Speichern einer Aufstellung von Inhaltsübertragungen, **dadurch gekennzeichnet, dass** der Zeitpunkt der Unterbrechung mit der Aufstellung von Inhaltsübertragungen verglichen wird, um den Zeitpunkt für das Wiederaufnehmen des Abspielens des Inhalts während der nachfolgenden Übertragung zu bestimmen.

6. Die Erfindung nach Anspruch 1, **dadurch gekennzeichnet, dass** die laufende Übertragung des Inhalts Daten enthält, die dem Zeitpunkt der nachfolgenden Übertragung des Inhalts entsprechen.

7. Die Erfindung nach Anspruch 1, **dadurch gekennzeichnet, dass** Schritt (e) Folgendes umfasst:
(1) Erzeugen einer Anwenderaufforderung in Bezug auf die Wiederaufnahme des Abspielens des Inhalts während der nachfolgenden Übertragung; und
(2) Bestimmen, ob das Abspielen des Inhalts auf der Grundlage einer Anwenderreaktion auf die Anwenderaufforderung wiederaufgenommen werden soll.

8. Die Erfindung nach Anspruch 1, **dadurch gekennzeichnet, dass** das Abspielen des empfangenen Inhalts direkt von einem Anwender unterbrochen wird.

9. Die Erfindung nach Anspruch 1, **dadurch gekennzeichnet, dass** das Abspielen des empfangenen Inhalts indirekt von einem Anwender unterbrochen wird, **dadurch gekennzeichnet, dass** das Abspielen automatisch nach Feststellung einer Bedingung für das Unterbrechen des Abspielens unterbrochen wird, **dadurch gekennzeichnet, dass** die Festlegung der Bedingung durch den Anwender zuvor empfangen wurde.

10. Die Erfindung nach Anspruch 1, **dadurch gekennzeichnet, dass** das Abspielen des empfangenen Inhalts durch einen Signalverlust der laufenden Übertragung unterbrochen wird.

11. Die Erfindung nach Anspruch 1, die außerdem Folgendes umfasst: das Übertragen der mit der Unterbrechung verbundenen Informationen zur Verwendung bei nicht-lokaler Verarbeitung.

12. Die Erfindung nach Anspruch 1, **dadurch gekennzeichnet, dass**
es sich bei dem Inhalt um Video-Inhalt handelt, der per Streaming übertragen wird;
das Verfahren von einer drahtlosen Vorrichtung durchgeführt wird, die weiter angepasst ist, um als Mobilfunktelefon zu fungieren;
der Inhalt unter Verwendung von Punkt-zu-Punkt-Drahtloskommunikation in schleifenförmiger Weise an die drahtlose Vorrichtung übertragen wird und außerdem den Schritt des Empfangens und Speichems einer Aufstellung von Inhaltsübertragungen umfasst; und
der Zeitpunkt der Unterbrechung mit der Aufstellung von Inhaltsübertragungen verglichen wird, um den Zeitpunkt für die Wiederaufnahme des Abspielens des Inhalts während der nachfolgenden Übertragung zu bestimmen.

13. Die Erfindung nach Anspruch 12, **dadurch gekennzeichnet, dass** Schritt (e) Folgendes umfasst:
(1) Erzeugen einer Anwenderaufforderung in Bezug auf die Wiederaufnahme des Abspielens des Inhalts während der nachfolgenden Übertragung; und
(2) Bestimmen, ob das Abspielen des Inhalts auf der Grundlage einer Anwenderreaktion auf die Anwenderaufforderung wiederaufgenommen werden soll.

14. Eine Vorrichtung, die Folgendes umfasst:
(a) Mittel zum Empfangen einer laufenden Übertragung von Inhalt;
(b) Mittel zum Abspielen des empfangenen Inhalts während der laufenden Übertragung;
(c) Mittel zum Unterbrechen des Abspielens des empfangenen Inhalts vor Ende des Inhalts;
(d) Mittel zum Erzeugen von Informationen in Bezug auf den Zeitpunkt der Unterbrechung des Abspielens; und
(e) Mittel zum Wiederaufnehmen des Abspielens des Inhalts während einer nachfolgenden anderen Übertragung des Inhalts, **dadurch gekennzeichnet, dass** die Wiederaufnahme des Abspielens des Inhalts auf den mit der Unterbrechung verbundenen Informationen beruht.

15. Die Erfindung nach Anspruch 14, **dadurch gekennzeichnet, dass:**
es sich bei dem Inhalt um Video-Inhalt handelt, der per Streaming abgespielt wird;
Mittel (a)-(e) Teil einer drahtlosen Vorrichtung sind, die weiter angepasst ist, um als Mobilfunktelefon zu fungieren;
der Inhalt über Punkt-zu-Punkt-Drahtloskommunikation in schleifenförmiger Weise an die drahtlose Vorrichtung übertragen wird;
außerdem Mittel für das Empfangen und Speichern einer Aufstellung von Inhaltsübertragungen enthalten sind; und
der Zeitpunkt der Unterbrechung mit der Aufstellung von Inhaltsübertragungen verglichen wird, um den Zeitpunkt für die Wiederaufnahme des Abspielen des Inhalts während der nachfolgenden Übertragung zu bestimmen.

16. Die Erfindung nach Anspruch 14, **dadurch gekennzeichnet, dass** die laufende Übertragung des Inhalts Daten enthält, die dem Zeitpunkt der nachfolgenden Übertragung des Inhalts entsprechen.

17. Ein Verfahren, das Folgendes umfasst:
(a) Übertragen einer Aufstellung von Inhaltsübertragungen an eine drahtlose Vorrichtung; und
(b) Übertragen von Inhalt an die drahtlose Vorrichtung in schleifenförmiger Weise, **dadurch gekennzeichnet, dass** die drahtlose Vorrichtung angepasst ist, um
(1) eine laufende Übertragung von Inhalt zu empfangen;
(2) den empfangenen Inhalt während der laufenden Übertragung abzuspielen;
(3) das Abspielen des empfangenen Inhalts vor Ende des Inhalts zu unterbrechen;
(4) Informationen in Bezug auf den Zeitpunkt der Unterbrechung des Inhalts zu erzeugen; und
(5) das Abspielen des Inhalts während einer nachfolgenden Übertragung des Inhalts wiederaufzunehmen, **dadurch gekennzeichnet, dass** die Wiederaufnahme des Abspielens des Inhalts auf den mit der Unterbrechung verbundenen Informationen und der Aufstellung von Inhaltsübertragungen beruht.

18. Die Erfindung nach Anspruch 17, **dadurch gekennzeichnet, dass:**
es sich bei dem Inhalt um Video-Inhalt handelt, der per Streaming abgespielt wird;
Schritte (a)-(b) unter Verwendung eines Inhaltsservers durchgeführt werden;
die drahtlose Vorrichtung weiter angepasst ist, um als ein Mobilfunktelefon zu fungieren;
der Inhalt unter Verwendung von Punkt-zu-Punkt-Drahtloskommunikation in schleifenförmiger Weise an die drahtlose Vorrichtung übertragen wird; und
der Zeitpunkt der Unterbrechung mit der Aufstellung von Inhaltsübertragungen verglichen wird, um den Zeitpunkt für die Wiederaufnahme des Abspielens des Inhalts während der nachfolgenden Übertragung zu bestimmen.

19. Ein Kommunikationssystem, das Folgendes umfasst:
(a) Mittel zum Übertragen einer Aufstellung von Inhaltsübertragungen an eine drahtlose Vorrichtung; und
(b) Mittel zum Übertragen von Inhalt an die drahtlose Vorrichtung in schleifenförmiger Weise, **dadurch gekennzeichnet, dass** die drahtlose Vorrichtung angepasst ist, um:
(1) eine laufende Übertragung von Inhalt zu empfangen;
(2) den empfangenen Inhalt während der laufenden Übertragung abzuspielen;
(3) das Abspielen des empfangenen Inhalts vor Ende des Inhalts zu unterbrechen;
(4) Informationen in Bezug auf den Zeitpunkt der Unterbrechung des Abspielens zu erzeugen; und
(5) das Abspielen des Inhalts während einer nachfolgenden Übertragung des Inhalts wiederaufzunehmen, **dadurch gekennzeichnet, dass** die Wiederaufnahme des Abspielens des Inhalts auf den mit der Unterbrechung verbundenen Informationen und der Aufstellung von Inhaltsübertragungen beruht.

20. Die Erfindung nach Anspruch 19, **dadurch gekennzeichnet, dass:**
es sich bei dem Inhalt um Video-Inhalt handelt, der per Streaming abgespielt wird;
Mittel (a)-(b) Teil eines Inhaltsservers sind;
die drahtlose Vorrichtung weiter angepasst ist, um als ein Mobilfunktelefon zu fungieren;
der Inhalt unter Verwendung von Punkt-zu-Punkt-Drahtloskommunikation in schleifenförmiger Weise an die drahtlose Vorrichtung übertragen wird; und
der Zeitpunkt der Unterbrechung mit der Aufstellung von Inhaltsübertragungen verglichen wird, um den Zeitpunkt für die Wiederaufnahme des Abspielens des Inhalts während der nachfolgenden Übertragung zu bestimmen.

## Revendications

1. Un procédé comprenant :
(a) la réception d'une transmission de contenu en cours;
(b) la lecture du contenu reçu au cours de la transmission;
(c) l'interruption de la lecture du contenu reçu avant la fin du contenu;
(d) la production d'informations relatives au choix du moment de l'interruption de la lecture; et
(e) la reprise de la lecture du contenu durant une autre transmission du contenu suivante, dans lequel la reprise de la lecture du contenu repose sur les informations relatives à l'interruption.

2. L'invention selon la revendication 1, dans laquelle : le contenu est un contenu vidéo lu en continu; le procédé est mis en oeuvre au moyen d'un dispositif sans fil; et le contenu est transmis en boucle fermée au dispositif sans fil par le biais de communications sans fil.

3. L'invention selon la revendication 2, dans laquelle le dispositif sans fil est aussi adapté afin d'assurer une fonction de téléphone portable.

4. L'invention selon la revendication 2, dans laquelle le contenu est transmis au dispositif sans fil en utilisant un procédé d'envoi individuel.

5. L'invention selon la revendication 1, comprend également l'étape de réception et de stockage d'un programme de transmissions du contenu, dans laquelle le choix du moment de l'interruption est comparé au programme de transmissions du contenu afin de déterminer le choix du moment de la reprise de la lecture du contenu au cours de la transmission suivante.

6. L'invention selon la revendication 1, dans laquelle la transmission du contenu en cours comporte des données correspondant au choix du moment de la transmission du contenu suivante.

7. L'invention selon la revendication 1, dans laquelle l'étape/les étapes comprend/comprennent :
(1) la production d'un message guide-opérateur relatif à la reprise de la lecture du contenu au cours de la transmission suivante; et
(2) le moyen de déterminer la nécessité de reprendre la lecture du contenu grâce à une réponse de l'utilisateur au message guide-opérateur.

8. L'invention selon la revendication 1, dans laquelle la lecture du contenu reçu est directement interrompue par un utilisateur.

9. L'invention selon la revendication 1, dans laquelle la lecture du contenu reçu est indirectement interrompue par un utilisateur, dans laquelle la lecture est automatiquement interrompue au moment de la détection d'une condition d'interruption de la lecture, dans laquelle la spécification de la condition par l'utilisateur a été préalablement reçue.

10. L'invention selon la revendication 1, dans laquelle la lecture du contenu reçu est interrompue par une perte de signal de la transmission en cours.

11. L'invention selon la revendication 1, comprend également la transmission d'informations relatives à l'interruption qui seront utilisées dans le cadre de traitement non local.

12. L'invention selon la revendication 1, dans laquelle:
le contenu est un contenu vidéo lu en continu;
le procédé est mis en oeuvre par un dispositif sans fil également adapté afin d'assurer une fonction de téléphone portable;
le contenu est transmis en boucle fermée au dispositif sans fil par le biais de communications sans fil par envoi individuel; comprend également l'étape de réception et de stockage d'un programme de transmissions du contenu; et
le choix du moment de l'interruption est comparé au programme de transmissions du contenu afin de déterminer le choix du moment de reprise de la lecture du contenu au cours de la transmission suivante.

13. L'invention selon la revendication 12, dans laquelle l'étape/les étapes comprend/comprennent:
(1) la production d'un message guide-opérateur relatif à la reprise de la lecture du contenu au cours de la transmission suivante; et
(2) le moyen de déterminer la nécessité de reprendre la lecture du contenu grâce à une réponse de l'utilisateur au message guide-opérateur.

14. Un appareil comprenant:
(a) un moyen de réception d'une transmission de contenu en cours;
(b) un moyen de lecture du contenu reçu durant la transmission en cours;
(c) un moyen d'interruption de la lecture du contenu reçu avant la fin du contenu;
(d) un moyen de production d'informations relatives au choix du moment de l'interruption de la lecture; et
(e) un moyen de reprise de la lecture du contenu au cours d'une autre transmission du contenu suivante, dans lequel la reprise de la lecture du contenu repose sur les informations relatives à l'interruption.

15. L'invention selon la revendication 14, dans laquelle:
le contenu est un contenu vidéo lu en continu;
les moyens (a) et (e) font partie d'un dispositif sans fil aussi adapté afin d'assurer une fonction de téléphone portable;
le contenu est transmis en boucle fermée à un dispositif sans fil par le biais de communications sans fil par envoi individuel;
elle comprend aussi le moyen de recevoir et de stocker un programme de transmissions de contenu; et
le choix du moment de l'interruption est comparé au programme de transmissions de contenu afin de déterminer le choix du moment de la reprise de la lecture du contenu durant la transmission suivante.

16. L'invention selon la revendication 14, dans laquelle la transmission du contenu en cours comporte des données correspondant au choix du moment de la transmission du contenu suivante.

17. Un procédé comprenant:
(a) la transmission d'un programme de transmissions de contenu à un dispositif sans fil; et
(b) la transmission du contenu à un dispositif sans fil en boucle fermée, dans lequel le dispositif sans fil est adapté afin:
(1) de recevoir une transmission de contenu en cours;
(2) de lire le contenu reçu durant la transmission en cours;
(3) d'interrompre la lecture du contenu reçu avant la fin du contenu;
(4) de produire les informations relatives au choix du moment de l'interruption de la lecture; et
(5) de reprendre la lecture du contenu durant une transmission de contenu suivante, dans lequel la reprise de la lecture du contenu repose sur les informations relatives à l'interruption et le programme des transmissions du contenu.

18. L'invention selon la revendication 17, dans laquelle:
le contenu est un contenu vidéo lu en continu;
les étapes (a)-(b) sont mises en oeuvre par le biais d'un serveur de contenu;
le dispositif sans fil est aussi adapté afin d'assurer une fonction de téléphone portable;
le contenu est transmis en boucle fermée au dispositif sans fil par le biais de communications sans fil par envoi individuel; et
le choix du moment de l'interruption est comparé au programme de transmissions de contenu afin de déterminer le choix du moment de la reprise de la lecture du contenu durant la transmission suivante.

19. Un système de communications comprenant:
(a) un moyen de transmission d'un programme de transmissions de contenu à un dispositif sans fil; et
(b) un moyen de transmission de contenu à un dispositif sans fil en boucle fermée, dans lequel le dispositif sans fil est adapté afin:
(1) de recevoir une transmission de contenu en cours;
(2) de lire le contenu reçu durant la transmission en cours;
(3) d'interrompre la lecture du contenu reçu avant la fin du contenu;
(4) de produire les informations relatives au choix du moment de l'interruption de la lecture; et
(5) de reprendre la lecture du contenu durant une transmission de contenu suivante, dans lequel la reprise de la lecture du contenu repose sur les informations relatives à l'interruption et le programme des transmissions du contenu.

20. L'invention selon la revendication 19, dans laquelle:
le contenu est un contenu vidéo lu en continu;
les moyens (a)-(b) font partie d'un serveur de contenu;
le dispositif sans fil est aussi adapté afin d'assurer une fonction de téléphone portable;
le contenu est transmis en boucle fermée au dispositif sans fil par le biais de communications sans fil par envoi individuel; et
le choix du moment de l'interruption est comparé au programme de transmissions de contenu afin de déterminer le choix du moment de la reprise de la lecture du contenu durant la transmission suivante.
